# EUROPEAN PATENT APPLICATION

(11) **EP 2 308 658 A1**
(43) Date of publication of application: **13.04.2011**
(21) Application number: 09180420.3
(22) Date of filing: 22.12.2009
(51) Int. Cl.: B26D 3/06, B26D 3/08

(54) **A method for slitting a metal sheet before folding**

(30) Priority: 09.10.2009 TH 457309
(71) Applicant: Inter License Co.,LTD, Bangkok (TH)
(72) Inventor: Leelaprachakul, Rachata, Bangkok (TH)
(74) Representative: Métay, Émeline

(57) **Abstract**

A method for slitting a metal sheet (1) to produce a slit that reduces the folding resistance of the metal sheet. A cutter (3) and/or a cutting disc are used to make a slit on the metal surface. Press rollers (4a, 4b) press on the formed slit to produce a smooth slit having a uniform depth along the entire length of the slit.

## Description

### FIELD OF THE INVENTION

### Metal folding

### BACKGROUND OF THE INVENTION

Folding a metal sheet to produce a finished work having different cross section may produce a too round corner which is not aesthetic if the thickness of the folded metal sheet is higher than 3 mm. The solve the above mentioned problem, the inner surface of the fold has to be slit to reduce the internal resistance of the metal sheet which results in a sharper corner. In the prior art, the slitting process is usually carried out by fixing the metal sheet in a position, then a cutter is moved along the whole length of the metal sheet or up to a predetermined distance. In this process, the metal sheet has to be moved to a next process after it has been slit. Such requirement, when applied to a continuous process, causes an interruption in the process. In addition, the depth of the slit may not be uniform due to the thickness of the metal sheet. Such non-uniformity results in uneven fold.

Therefore, an objective of this invention is to develop a slitting method. The method of the present invention is carried out by moving the metal sheet to be slit passes a cutter and downstream processes until the end of the production line. The slitting step is carried out by a cutter which cut a V-shape slit. In case a deeper slit is needed, a second cutter and/or a cutting disc, which rotates horizontally and co-currently or counter-currently with the moving direction of the metal sheet, may be installed. The installation of the second cutter depends on the type of the metal sheet. Finally, the slit is pressed by a roller to produce a deep, smooth and uniform slit.

The present invention is the development of a method for slitting a metal sheet and pressed the produced to produce a deep, smooth and uniform slit.

### BRIEF DESCRIPTION OF THE DRAWINGS

Figure 1 shows the components of the first embodiment of the slitting process of the present invention. This figure show the cutter and the roller.
Figure 2 shows the components of the second embodiment of the slitting process of the present invention. This figure show the cutter disc and the roller.
Figure 3 shows the components of the third embodiment of the slitting process of the present invention. This figure show the cutter disc and the roller.

### DETAIL DESCRIPTION OF THE PREFERRED EMBODIMENTS

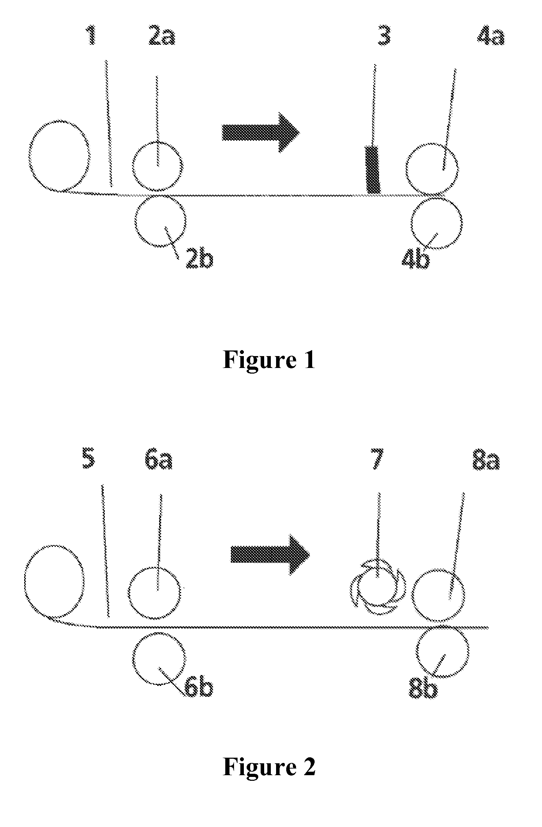

Referring to figure 1, a roll of metal or a metal sheet is cut to have a predetermined size. The obtained metal sheet 1 is inserted between a pair of rollers, 2a and 2b, which feed the metal sheet to move from the left to the right of the figure. A cutter 3 is installed in a fixed position. Another pair of rollers, 4a and 4b, are installed next to the cutter 3. When the metal sheet 1 passes the cutter 3, a slit will be formed on the surface of the metal sheet 1. After passing the cutter 3, the press rollers 4a and 4b will press the formed slit again to smoothen the cut.

Referring to figure 2, a roll of metal or a metal sheet is cut to have a predetermined size. The obtained metal sheet 5 is inserted between the two rollers 6a and 6b. A cutting disc 7 having cutting blade along its circumference is fixed in a position which allows its to rotate co-currently or counter-currently with the moving direction of the metal sheet. Another pair of rollers, 8a and 8b, are installed next to the cutting disc 7. The press rollers 8a and 8b have the same function as of the rollers 4a and 4b.

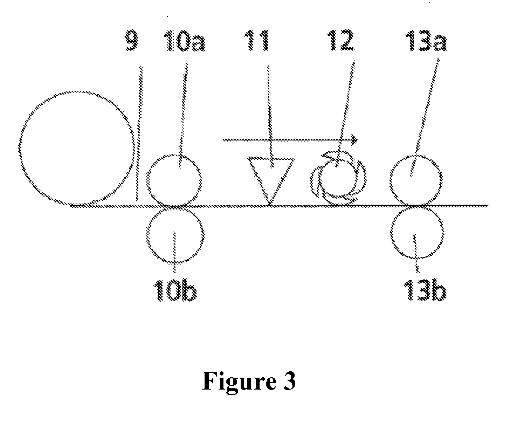

Referring to figure 3, a roll of metal or a metal sheet is cut to have a predetermined size. The obtained metal sheet 9 is inserted between the two rollers 10a and 10b. A cutter 11 and a cutting disc 12, which is fixed in a position and rotates co-currently or counter-currently with the moving direction of the metal sheet 9, will make a slit on the surface of the metal sheet. When the process begins, the rollers 10a and 10b will feed the metal sheet 9 to move from the left to the right of the figure. When the metal sheet passes the cutter 11 and the cutting disc 12, the surface of the metal sheet will be slit twice on the same slit.
Finally, the metal sheet is inserted between the press rollers 13a and 13b which will press to produce a smooth slit.

## Claims

1. A method for slitting a metal sheet to make a slit for different purposes such as folding, **characterized in that** a roll of metal or a metal sheet is inserted between a pair of rollers located above and beneath the metal sheet. The said pair of rollers will feed the metal sheet to pass a cutter and a roller which presses on the cutter. The second cutting tool is a cutting disc having cutting blade along its circumference and is located next to the cutter. The cutting blade also slits on the same slit produced on the surface of the metal sheet by the first cutter.
A unique character of the present invention is the slitting process is carried out while the metal sheet is in motion using a cutting tool. In addition, the formed slit is pressed by rollers again.

2. A method for slitting a metal sheet according to claim 1, **characterized in that** only a cutter is used.

3. A method for slitting a metal sheet according to claim 1, **characterized in that** only a cutting disc having cutting blade along its circumference is used.

4. A method for slitting a metal sheet according to claim 1, **characterized in that** only the press rollers are used.

5. A method for slitting a metal sheet according to claim 1, **characterized in that** only a cutter and press rollers are used.

6. A method for slitting a metal sheet according to claim 1, **characterized in that** only a cutting disc having cutting blade along its circumference and press rollers are used.
